# EUROPEAN PATENT SPECIFICATION

(11) **EP 0 602 129 B1**
(45) Date of publication and mention of the grant of the patent: **16.04.1997**
(21) Application number: 92918804.3
(22) Date of filing: 02.09.1992
(51) Int. Cl.: A61C 15/04, B65H 49/06, B65H 55/02, B65H 57/18

(54) **DISPENSING MEANS**
AUSGABEVORRICHTUNG
DISTRIBUTEUR

(30) Priority: 02.09.1991 AU PK8077/91; 29.07.1992 AU PL3796/92
(43) Date of publication of application: 22.06.1994
(73) Proprietor: ESFLOSS (H.K.) LTD., (HK)
(72) Inventor: SAUNDERS, Stuart, David, Murwillumbah, NSW 2484 (AU)
(74) Representative: Enskat, Michael Antony Frank
(86) International application number: AU9200466
(87) International publication number: WO9304640

(56) References cited:
- WO-A-86/06047
- AU-A- 6 675 086
- AU-A- 7 627 691
- AU-A- 8 229 082
- US-A- 1 588 385
- US-A- 2 893 405
- US-A- 4 019 522
- US-A- 4 327 755
- US-A- 4 881 560
- US-A- 5 065 861
- US-A- 5 076 423

## Description

This invention relates to dispensing means for dispensing dental floss. A dental floss dispensing means as specified in the pre-characterising portion of claim 1 is disclosed in US-A-4 327 755.

This invention has particular reference to dispensing means for dispensing dental floss and for illustrative purposes particular reference will be made hereinafter to such application. However it is to be understood that this invention can be used for dispensing other forms of threads and filaments such as, for example, fuse wire or sewing, binding or whipping thread, tie wire or fishing line.

Many advances have been made in recent years in dental health and hygiene. These have ranged from treatment of reticulated water supplies with fluoride to considerably reduce incidence of cavities in the teeth of the population, to new materials for repair of damaged teeth, and new methods of diagnosis and treatment for all problems of the teeth and mouth. A plethora of devices ranging from the traditional tooth brush, geometric tooth brushes, rotating head tooth brushes, water jet tooth brushes, tooth picks, flosses and floss/tooth pick combinations supplement the above advances in dental health, making a high level of oral hygiene possible.

Many companies around the world manufacture dental floss dispensers. Typically such floss dispensers are formed as rectangular packages about 20 mm thick, 40-60 mm wide, and 55-70 mm high. However, while the advantages of using dental floss after each meal are well recognised, the present inconvenience of use resulting from the relatively bulky packages deters such use.

Small dispensers for carrying in a user's pocket have also been proposed. US patent No. 1,588,358 granted to G. F. Miller in 1926 proposes a small dispenser of circular form in which the spool of floss is supported on a former housed for rotation within an external housing. Withdrawal of thread from the dispenser is accompanied by a rotation of the spool. This results in a relatively thick assembly which is unacceptably large by modern standards. International publication No. Wo 86/06047 discloses a very small floss dispenser, however this device is a one-use device only.

This invention aims to alleviate at least one of the abovementioned disadvantages and to provide thread dispensing means which will be reliable and efficient in use. Other advantages of this invention will hereinafter become apparent.

With the foregoing and other objects in view, this invention resides in a dispensing means as specified in claim 1.

Suitably the dispensing means is thin and has major face dimensions similar to a credit card whereby it may be supported in a wallet. Preferably the spool of thread or floss is wound on a suitable former, preferably using waxed or other coated thread or floss whereby the thread or floss has the ability to cohere, thus giving adequate inherent structural strength whereby it may be removed from the former, and fixedly supported between thin shell-like walls spaced apart by the thickness of the spool. For example a plastisol or other plastic coating, such as is used in unwaxed dental floss may be used. Impregnation of the yarn with wax or other suitable material, which undergoes phase change or solidification after the spool is wound, imparts structural strength to the spool.

Suitably the spool of thread or floss is formed as a thin formerless ovoid shaped spool whereby a longitudinal depression may be formed in the wall assembly extending into the centre portion of the spool so as to accommodate the thread guide at one end and the severing means at the other end, leaving sufficient space therebetween to enable a user to gain finger access to the thread extending between the thread guide and the severing means. Preferably the thread guide at one end of the recess is disposed at a lower level than the severing means at the other end whereby floss may be pulled from the thread guide and engaged with the severing means without having to manipulate the thread intermediate the thread guide and the severing means. It is also preferred that the thread guide, the severing means aperture and the thread extending therebetween all lie below the top or outer major face of the supporting wall assembly and between the opposed major faces of the wall assembly.

The spool may be formed by winding on a shaped former, held between two plates spaced appropriately to control the thickness of the spool of floss or thread or filament or the like and hereinafter collectively referred to as floss. During winding, application of heat may be useful to melt or soften the wax or other coating on the floss and this coupled with the tension of the thread or floss causes the spool to fuse into the integral formerless spool required.

The flat spool of floss with an elongated hole in the centre provides for a minimum thickness package which is further assisted by forming the recess for the guide means, the severing means and for the floss to pass therebetween, all within the spool centre cavity. Thus all major elements lie substantially within the same plane. As the guide means and cutter are within the centre of the spool of floss, when the floss is drawn from the dispensing means it is drawn from the inside of the spool. Thus the floss can unwind without the spool rotating or moving and also with a minimum of twisting. Thus the floss as it comes out is substantially straight because the inner circumference of the spool at all times, is relatively large compared to conventional spools of floss packages. For example in a credit card size dispensing means the minimum inner circumference of the spool is in the order of 110 millimeters and increases as the floss is used. Thus the undesirable tendency that conventional flosses have of twisting after cutting may be reduced.

Alternatively the floss may be wound as a cylinder having a circumference slightly less than one half of the major dimensions of the final package, and the length of the cylinder being slightly less than the other major dimension of the package. After winding, the cylinder is then flattened to form a rectangle. The floss may also be wound flat directly. Each final dimension would be less than the internal dimension of the housing to allow for clearance between the floss and the housing. This clearance can be minimal, as the spool may be fixedly mounted in the housing. The thickness of the cylinder would be one half the thickness of the required floss package (say 1.3 millimeters) so that on flattening the cylinder, a package of the required thickness (say 2.6 millimeters not including wall thickness) would be produced.

It is also preferred that the lead-out portion of the floss which remains in the package is retained by the severing means. This may be achieved by forming the cutting member of the severing means with a cutting edge distant from the guide means and a retaining edge adjacent the guide means. Furthermore with the floss guide means and the severing means recessed in the centre of the side wall face, the floss line may be maintained below the adjacent major surface of the housing, even when cutting. Thus the floss will tend to stay cleaner. Also, the cutter of the severing means will not be prone to catch on clothes or to injure, as its top surface need not protrude beyond the adjacent major surface of the housing.

In order to prevent the spool from collapsing when the last few coils of floss remain, the outer surface of the spool is bonded into the housing so that it is supported against collapse even when just a little floss remains.

A suitable method of supporting a spool of thread to be dispensed in a housing includes:-
inserting the spool into the housing, and encapsulating the spool within the housing with a suitable medium which does not prevent withdrawal of the thread from the spool. Preferably the medium is wax. This may be introduced by clamping the spool between a side wall of the housing and a false back wall so as to form an airtight chamber containing the spool. Molten wax is drawn into this airtight chamber through one hole in the false back wall, connected to a supply of molten wax, by applying a vacuum to another hole in the false back. Typically these holes would be at opposite ends of the chamber, and the hole to which the vacuum is applied could be elevated relative to the other hole, so that a "bleed" effect ensures that all air bubbles are removed. The wax may be circulated through both holes in normal operation, that is injecting the wax, and short circuited through the controlling valve when not operating. This will ensure that the wax remains molten at all times. Continuous circulation will prevent "freezing" of the wax in the valve rendering the valve inoperable during the production process.

In order that this invention may be more readily understood and put into practical effect, reference will now be made to the accompanying drawings which illustrates a preferred embodiment of this invention and wherein:-
FIG. 1 is a perspective view of a preferred form of dental floss dispenser;
FIG. 2 is a diagrammatic plan view illustrating the layout of the dispenser illustrated in FIG. 1;

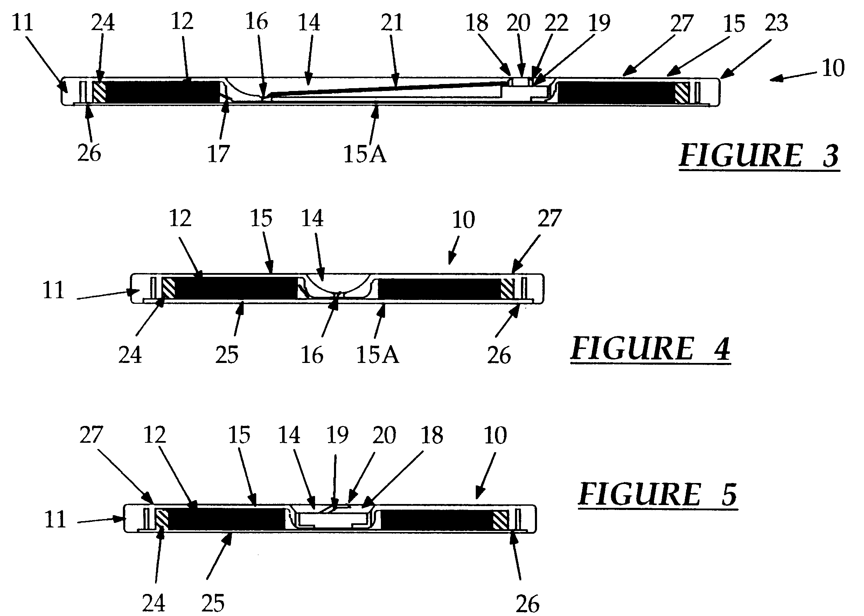

FIG. 3 is a sectional view through the longitudinal centreline of the dispenser, and
FIGS. 4 and 5 are respective transverse sectional views through the floss lead out guide and the floss severing means.

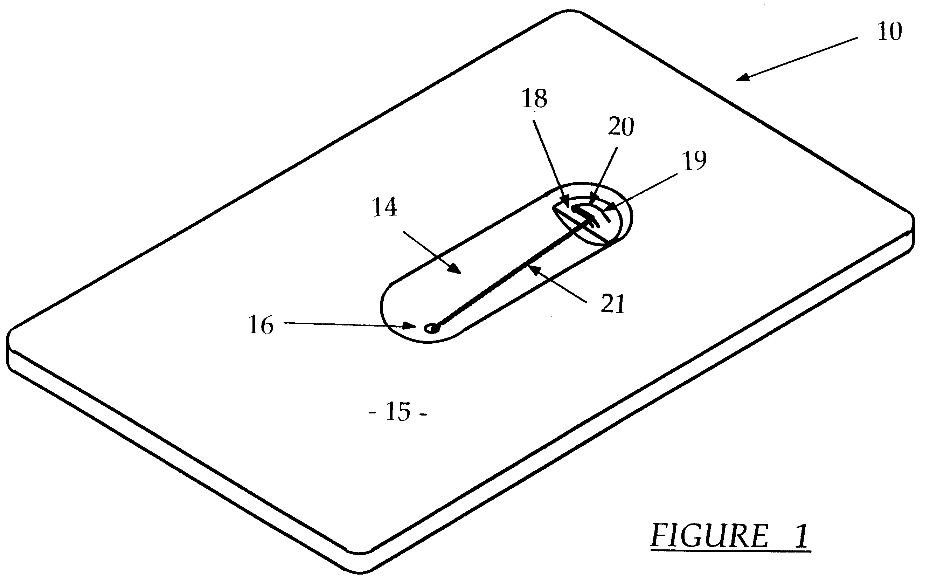

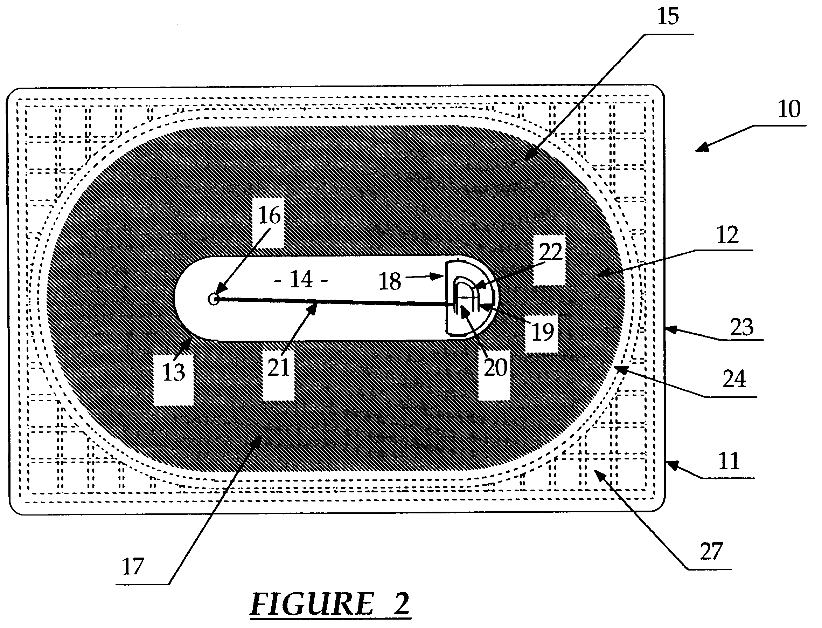

The dental floss dispenser 10 illustrated in Fig. 1 is of substantially credit card size, which is an acceptable size for consumers, being able to fit easily and unobtrusively into a standard wallet or pocket. The external housing 11 is formed of a plastics material and has major face dimensions of 86 mm x 54 mm and a thickness of approximately 3.6 mm. The housing 11 contains approximately 50 metres of dental floss stored internal thereof in a oval shaped spool 12 as can be seen from Fig. 2. The spool 12 is relatively thin and is formed with a relatively large open centre 13 which is elongated.

An elongated recess 14 is formed in one side wall 15 of the housing 11 and supports, at one end, a lead out aperture 16 through which the floss 17 is dispensed from the interior of the spool 12. The recessed side wall 15 is disposed parallel to the major faces of the spool and the recess 14 extends into the large open centre 13 of the spool 12 and terminates in spaced relationship with the opposite planar side wall 15a. The recess 14 is relatively deep adjacent the aperture 16 and continues along at this depth to its opposite end at which the thread cutter/holder 18 is disposed above the base of the recess 14. The cutter/ holder or severing means 18 is formed from stainless steel and includes a raised tongue portion 20 struck from the thread cutter 18. The tongue 20 is raised slightly and extends substantially in the same plane as the planar portion of the side wall 15. The tongue 20 forms a cutting edge 19 adjacent the end of the recess 14. The cutting edge is formed with an inwardly sloping chamfer 22 in order to minimise risk of personal injury.

A lead of floss 21 stretches from the aperture 16 to the raised tongue 20 at which it is held. The lead of floss extends along the recess 14, below the level of the planar portion of the side wall 15 and above the base of the recess whereby it spans between the aperture 16 and the tongue 20 in free space making it easily accessible for grasping.

The floss spool 12 unwinds from the inside of the spool whereby the lead-out floss 21 passes from the inner face of the spool and out through the aperture 16 to the recess 14. Sufficient spacing exists between the aperture 16 and the cutter 18 to allow a user's finger to grasp the lead of floss 21 and to draw it through the aperture 16. Floss drawn therefrom unwinds from the inside of the spool, while the body of the spool remains fixed and stationary within the housing.

In a typical use, the floss dispenser 10 is held horizontally by its long sides between the thumb and forefinger of the left hand. The user, after grasping the lead of floss 21 and pulling out the required amount of floss then wipes the floss along the edge 23 of the housing 11 adjacent the thread cutter 18. The location of the floss exit aperture 16 in the base of the recess 14 causes such wiping action to initially engage the floss under the tongue 20 for clamping thereby and as the user draws the floss further along the edge 23 the floss will be severed by the cutting edge 19. After cutting, the end of the floss remains attached to the spool inside the housing 11 and is retained under the tongue 20 providing a new lead of floss 21 ready for further dispensing. The cutting action occurs even though the cutting edge 19 is entirely below the top surface of the housing because of the relatively lower location of the aperture 16.

The above arrangement ensures maximum safety and also obviates the need for a safety cover. This safety is further enhanced by the chamfered configuration of the cutting edge 19 which prevents the skin being caught under the cutting edge 19, thereby preventing injury. This safety design alleviates damage to clothing and the like.

The spool 12 is secured within the housing 11 by solidified wax, 24 or other suitable material. This body of wax fixes the spool within the housing, and prevents collapse of the spool when only a few threads remain. A back plate 25 forms the back surface of the housing 11 and is joined by wall 26 formed therewith to the front wall assembly 27 by suitable means such as ultrasonic welding or solvent welding, or by adhesive bonding.

The above arrangement is very efficacious to use. An advantage of the particular arrangement is that the opposed flat surfaces of the housing 11 can be used for product or company information, advertising or other promotional information, reproduction of paintings or photographs, information such as dentist's appointment reminders and contact details, or user and community medical information such as blood group, allergies and/or other special medical conditions, whether organ donations are permitted, etc.

This design is also relatively rigid for a thin assembly. The strength is a result of the physical arrangement of the elements which is that of an entirely closed rectangular prism with only one aperture near the centre and recess, the location and shape of which acts as a spacer to keep the walls apart under bending or torsion, maintaining its strength.

A preferred method for assembling the dental floss dispenser 10 is as follows. An appropriate floss fibre is selected which is coated with wax or with another suitable material. The floss is then heated to melt the coating, and is then wound on a mandrel which has a suitably shaped core to produce the required elongated hole in the centre of the finished spool. The circumference of the core may require a relief angle e.g. 45 degrees to facilitate release of the spool from the mandrel. When the mandrel is unclamped, the tension within the spool, and the stretch of the floss will cause the spool to slide down the 45 degree slope, automatically releasing itself from the core and one side, to remain loosely attached to the other side which is flat.

The core is located in the mandrel between a pair of parallel plates which are spaced apart by an amount equal to the thickness required for the finished spool. Typically, this thickness, or the distance between the plates, will be established by the thickness of the core.

In operation, the lead-out end of the floss is secured between the core and one of the side plates, and the entire assembly is placed in sufficient axial compression to prevent the plates moving apart as the floss builds up, and the total tension in the spool increases. This compression may be provided by a bolt and nut or by a clamping mechanism. The floss is passed through a wax bath, and/or tensioning devices as required. It may be then passed through a hot air blast which melts the wax on the floss and controls the temperature of the floss as it is wound. The mandrel may be preheated or precooled, if necessary, according to the coating material and other characteristics of the materials used. It is considered that preheating should maintain the desirable wax coating on the floss where wax coating is utilised. The mandrel is rotated at an appropriate speed and the floss is wound on. As the wax cools, it fuses together imparting solidity to the spool. After cooling, the spool is released from the mandrel.

The cutter is inserted into the housing and secured, preferably by clinching. The housing is then placed on the assembly table. Alternatively, the cutter may be inserted by injection of the plastic of the housing around the cutter which has been previously placed in the injection mould. When the housing is placed on the assembly table, a vacuum, ducted through the table, may be used to clamp the housing onto the table. The spool is then placed into the housing. The vacuum may then be used to suck the lead-in end of the floss through the thread guide or thread exit hole.

When the spool is correctly located, a false back which consists of a flat piece of rigid material, preferably transparent, and which has a thickness of a soft material such as polyurethane or silicone rubber, preferably also transparent, is placed on top of the housing and spool. The soft material produces a good seal, and the clamping pressure of the vacuum means that it also protrudes into the cavity, ensuring that the wax cast has a concave top surface. This facilitates the attachment of the backplate by maintaining the wax clear of the weld area ensuring good bonds.

The vacuum holding the housing to the assembly table is then transferred, via the floss exit hole, to the centre of the false back. The vacuum then clamps the false back to the housing. The false back seals a cavity between itself, the outside of the spool, and the inside of the housing. A pair of holes in the false back provide access to diametrically opposite points of the cavity. A vacuum is applied to one of these holes, and the other hole is connected to a supply of molten wax. The wax is then sucked into one hole and then passes out via the other hole. Alternatively, molten wax or other material can be pumped in via one hole and bled out via the other hole, in a similar manner. The valve controlling the flow of wax will ideally continually circulate the hot wax when not "injecting" to prevent the wax from freezing.

After an appropriate time, i.e. when the air is bled out, and the heat of the molten wax has created a good bond to the spool and to the housing, the vacuum or wax supply is cut off and the assembly is allowed to cool. When the wax has solidified, the vacuum is released, and the false back is removed and the back plate is placed on the housing. The backplate may also be secured by vacuum which may be a different level of vacuum to that used for securing the back plate. The back plate is welded to the housing by an ultrasonic welder, or by solvent welding or adhesive bonding. Assembly is now completed and the product can be released from the assembly table, by terminating the vacuum.

## Claims

1. Dispensing means [10] for dispensing dental floss [17] having a spool of floss [12] supported within a supporting wall assembly [11] which supports a floss guide [16] through which a selected length of the floss may be retrieved from the spool of floss [12] and severing means [18] for severing floss [17] retrieved through the floss guide [16];
the supporting wall assembly [11] has opposed major walls [25/27] interconnected about their edges by slender peripheral walls [26];
the spool of floss [12] is in the form of a relatively flat continuous spiral wound open centered spool supported with the opposed faces of said spool substantially coplanar with the inner faces of said opposed major walls [25/27], characterised in that
the floss guide [16] is disposed in the base portion of a recess [14] in one major wall [27];
the recess [14] is disposed medially of that major wall [27] and extends inwardly therefrom and terminates with its base portion disposed in closely spaced relationship with the opposite major wall [25]; the spool is disposed with its open centre [13] about said recess [14];
the outer edges of the spool of floss [12] are interlocked with the slender peripheral walls [26] whereby the spool of floss [12] is restrained from rotation within the supporting wall assembly [11];
floss [17] is retrieved through said thread guide [16] from the fixed spool of floss [12] by unwinding from its inner edge which is disposed about the recess [14], and
the severing means [18] is disposed in said recess [14].

2. Dispensing means as claimed in claim 1, wherein said spool of floss [12] is ovoid shaped and said recess [14] is a longitudinal recess extending along the ovoid shaped open centre portion of said spool and wherein the slender peripheral walls [26] are non-circular and include portions disposed closely adjacent the outer edges of the ovoid shaped spool of floss [12] whereby the spool of floss [12] is mechanically restrained from rotating within the supporting wall assembly [11].

3. Dispensing means as claimed in claim 1 or claim 2, wherein a filler extends between the outer edge of said spool of floss [12] and said slender peripheral walls [26].

4. Dispensing means as claimed in claim 3, wherein said open centered spool of floss [12] is formed with the coils of said spiral wound spool bonded to one another to form a thin formerless spool and the filler operatively supports the outer portion of the spool of floss [12] while enabling the floss to be withdrawn therefrom.

5. Dispensing means as claimed in claim 4, wherein said filler is a wax material.

6. Dispensing means as claimed in any one of the preceding claims, wherein said opposed major walls [25/27] are substantially business card sized and said slender peripheral walls [26] are of such size as to permit said dispensing means to be carried in a wallet.

7. Dispensing means as claimed in any one of the preceding claims, wherein said severing means [18] is disposed in said recess [14] inwardly of the outer face of said one major wall [27].

8. Dispensing means as claimed in claim 7, wherein said severing means [18] retains floss [17] which extends from said floss guide [16] to said severing means [18].

9. Dispensing means as claimed in claim 8, wherein floss [17] retained between said floss guide [16] and said severing means [18] is retained intermediate the outer face of said one major wall [27] and said base portion.

10. Dispensing means as claimed in any one of claims 2 to 9, wherein said filler is added as a liquid material between said spool of floss [12] and said slender peripheral walls [26] and which solidifies and interlocks said spool of floss [12] to said wall assembly [11].

11. Dispensing means as claimed in any one of claims 2 to 10, wherein said floss guide [16] and said severing means [18] are disposed at opposite ends of said elongate recess [14].

## Patentansprüche

1. Ausgabevorrichtung (10) zur Ausgabe von Zahnseide (17) mit einer Seidenspule (12), die innerhalb einer Stützwandeinheit (11) gehalten ist, welche eine Seidenführung (16), durch die eine bestimmte Länge an Seide von der Seidenspule (12) erhältlich ist, und Abtrennmittel (18) zum Abtrennen von durch die Seidenführung (16) entnommener Seide (17) trägt, wobei die Stützwandeinheit (11) gegenüberliegende Deckwände (25, 27) aufweist, die entlang ihrer Ränder durch dünne Randwände (26) miteinander verbunden sind, und die Seidenspule (12) in der Gestalt einer verhältnismäßig flachen, kontinuierlich spiralförmig gewundenen, in der Mitte materialfreien Spule vorliegt, die bei im wesentlichen koplanar ausgerichteten gegenüberliegenden Spulenseiten mit den Innenseiten der gegenüberliegenden Deckwände (25, 27) gehalten ist, **dadurch gekennzeichnet**, daß die Seidenführung (16) im Bodenbereich einer in eine Deckwand (27) eingebrachten Ausnehmung (14) angeordnet ist, daß die Ausnehmung (14) im Mittenbereich dieser Deckwand (27) angeordnet ist, sich von dieser nach innen erstreckt und mit ihrem in unmittelbarer Nähe zu der gegenüberliegenden Deckwand (25) angeordneten Bodenbereich abschließt, daß die Spule mit ihrem freien Zentrum (13) um die Ausnehmung (14) angeordnet ist, daß die Außenränder der Seidenspule (12) mit den dünnen Randwänden (26) gekoppelt ist, wodurch die Seidenspule (12) an einer Drehung innerhalb der Stützwandeinheit (11) gehindert ist, daß Seide (17) durch die Fadenführung (16) von der fixierten Seidenspule (12) durch Abwickeln von ihrem Innenrand, der um die Ausnehmung (14) angeordnet ist, erhältlich ist und daß das Abtrennmittel (18) in der Ausnehmung (14) angeordnet ist.

2. Ausgabevorrichtung nach Anspruch 1, bei der die Seidenspule (12) eiförmig ausgestaltet und die Ausnehmung (14) eine längliche Ausnehmung ist, die sich entlang des eiförmig ausgestalteten freien Mittenabschnittes der Spule erstreckt, und bei der die dünnen Randwände (26) von einer Kreisform abweichend ausgestaltet sind und den Außenrändern der eiförmig ausgestalteten Seidenspule (12) unmittelbar benachbarte Abschnitte aufweisen, wodurch die Seidenspule (12) mechanisch an einer Drehung innerhalb der Stützwandeinheit (11) gehindert ist.

3. Ausgabevorrichtung nach Anspruch 1 oder Anspruch 2, bei dem sich ein Füllstoff zwischen den Außenrändern der Seidenspule (12) und den dünnen Randwänden (26) erstreckt.

4. Ausgabevorrichtung nach Anspruch 3, bei der die in der Mitte materialfreie Seidenspule (12) aus miteinander verbundenen Wicklungen der spiralförmig gewundenen Spule gebildet ist, um eine dünne kernfreie Spule zu bilden, und wobei der Füllstoff wirkungsmäßig die Randbereiche der Seidenspule (12) unter Ermöglichen des Abzugs von Seide hält.

5. Ausgabevorrichtung nach Anspruch 4, bei dem der Füllstoff ein wachsartiges Material ist.

6. Ausgabevorrichtung nach einem der voranstehenden Ansprüche, bei dem die gegenüberliegenden Deckwände (25, 27) im wesentlichen in der Größe einer Scheckkarte ausgebildet und die dünnen Randwände (26) so bemessen sind, daß ein Mitführen der Ausgabevorrichtung in einer Brieftasche möglich ist.

7. Ausgabevorrichtung nach einem der voranstehenden Ansprüche, bei dem das Abtrennmittel (18) in bezug auf die Außenseite der einen Deckwand (27) innenliegend in der Ausnehmung (14) angeordnet ist.

8. Ausgabevorrichtung nach Anspruch 7, bei dem mit dem Abtrennmittel (18) sich von der Seidenführung (16) zu dem Abtrennmittel (18) erstreckende Seide (17) zurückhaltbar ist.

9. Ausgabevorrichtung nach Anspruch 8, bei der zwischen der Seidenführung (16) und dem Abtrennmittel (18) zurückgehaltene Seide (17) zwischen der Außenfläche der einen Deckwand (27) und dem Bodenbereich zurückgehalten ist.

10. Ausgabevorrichtung nach einem der Ansprüche 2 bis 9, bei dem der Füllstoff als Flüssigkeit zwischen der Seidenspule (12) und den dünnen Randwänden (26) hinzugefügt ist und der erstarrt sowie die Seidenspule (12) in bezug auf die Stützwandeinheit (11) fixiert.

11. Ausgabevorrichtung nach einem der Ansprüche 2 bis 10, bei der die Seidenführung (16) und das Abtrennmittel (18) an gegenüberliegenden Enden der länglichen Ausnehmung (14) angeordnet sind.

## Revendications

1. Moyen de distribution (10) destiné à distribuer du fil dentaire (17), comportant une bobine de fil (12) supportée dans un ensemble de paroi de support (11) supportant un guide-fil (16) à travers lequel une longueur choisie de fil peut être dévidée de la bobine de fil (12) et un moyen de détachement (18) servant à détacher le fil (17) dévidé à travers le guide-fil (16) ;
l'ensemble de paroi de support (11) comportant des parois principales (25, 27) opposées reliées au niveau de leurs bords par des parois périphériques minces (26) ;
la bobine de fil (12) se présentant sous la forme d'une bobine à centre ouvert, enroulée en spirale et en continu, relativement plate, et supportée de telle manière que les faces opposées de ladite bobine soient sensiblement dans le même plan que les faces intérieures desdites parois principales opposées (25, 27),
caractérisé en ce que
le guide-fil (16) est disposé dans la partie de base d'un évidement (14) d'une paroi principale (27) ;
l'évidement (14) est disposé au milieu de ladite paroi principale (27), s'étend vers l'intérieur par rapport à ladite paroi, et se termine avec sa partie de base disposée à une faible distance de la paroi principale (25) opposée ;
la bobine est disposée de telle manière que son centre ouvert (13) se trouve autour dudit évidement (14) ;
les bords extérieurs de la bobine de fil (12) sont en prise avec les parois périphériques minces (26), la bobine de fil (12) étant ainsi empêchée de tourner à l'intérieur de l'ensemble de paroi de support (11) ;
le fil (17) est dévidé à travers ledit guide-fil (16) à partir de la bobine fixe de fil (12) en étant déroulé depuis son bord intérieur disposé autour de l'évidement (14), et
le moyen de détachement (18) est disposé dans ledit évidement (14).

2. Moyen de distribution suivant la revendication 1, dans lequel la bobine de fil (12) est de forme ovoïde et l'évidement (14) est un évidement longitudinal s'étendant le long de la partie à centre ouvert, de forme ovoïde, de ladite bobine, et dans lequel les parois périphériques minces (26) sont non circulaires et comportent des parties adjacentes aux et proches des bords extérieurs de la bobine de fil (12) de forme ovoïde, ladite bobine de fil (12) étant mécaniquement empêchée de tourner à l'intérieur de l'ensemble de paroi de support (11).

3. Moyen de distribution suivant la revendication 1 ou 2, dans lequel une matière de remplissage s'étend entre le bord extérieur de ladite bobine de fil (12) et lesdites parois périphériques minces (26).

4. Moyen de distribution suivant la revendication 3, dans lequel la bobine de fil (12) à centre ouvert est formée de telle manière que les enroulements de ladite bobine enroulée en spirale sont collés les uns aux autres pour former une bobine mince sans gabarit d'enroulement, et la matière de remplissage supporte de manière fonctionnelle la partie extérieure de la bobine de fil (12) tout en permettant au fil d'être tiré de celle-ci.

5. Moyen de distribution suivant la revendication 4, dans lequel la matière de remplissage est une matière de cire.

6. Moyen de distribution suivant l'une des revendications précédentes, dans lequel les parois principales (25, 27) opposées ont sensiblement la taille d'une carte de visite, et les parois périphériques (26) minces sont d'une taille telle que ledit moyen de distribution peut être logé dans un portefeuille.

7. Moyen de distribution suivant l'une des revendications précédentes, dans lequel le moyen de détachement (18) est disposé dans l'évidement (14) vers l'intérieur par rapport à la face extérieure de la paroi principale (27).

8. Moyen de distribution suivant la revendication 7, dans lequel le moyen de détachement (18) retient le fil (17) qui s'étend à partir du guide-fil (16) vers ledit moyen de détachement (18).

9. Moyen de distribution suivant la revendication 8, dans lequel le fil (17) retenu entre le guide-fil (16) et le moyen de détachement (18) est retenu entre la face extérieure de la paroi principale (27) et la partie de base.

10. Moyen de distribution suivant l'une des revendications 2 à 9, dans lequel la matière de remplissage est ajoutée sous la forme d'une matière liquide entre la bobine de fil (12) et les parois périphériques (26) minces, et se solidifie en fixant ladite bobine de fil (12) à l'ensemble de paroi (11).

11. Moyen de distribution suivant l'une des revendications 2 à 10, dans lequel le guide-fil (16) et le moyen de détachement (18) sont disposés à des extrémités opposées de l'évidement allongé (14).
